# EUROPÄISCHE PATENTSCHRIFT

(11) **EP 3 105 703 B1**
(45) Veröffentlichungstag und Bekanntmachung des Hinweises auf die Patenterteilung: **01.01.2020**
(21) Anmeldenummer: 15704525.3
(22) Anmeldetag: 12.02.2015
(51) Int. Cl.: G06F 21/62, G06F 21/60, G06F 16/22

(54) **VERFAHREN UND SYSTEM ZUM SICHERN VON DATENBANKRELATIONEN VOR UNBERECHTIGTEM ZUGRIFF**
METHOD AND SYSTEM FOR SAFEGUARDING DATABASE RELATIONS AGAINST UNAUTHORISED ACCESS
PROCÉDÉ ET SYSTÈME DE SÉCURISATION DE RELATIONS DE BASES DE DONNÉES CONTRE UN ACCÈS NON AUTORISÉ

(30) Priorität: 12.02.2014 DE 102014101710
(43) Veröffentlichungstag der Anmeldung: 21.12.2016
(73) Patentinhaber: Uniscon universal identity control GmbH, 80339 München (DE)
(72) Erfinder: JÄGER, Hubert, 82049 Pullach (DE); NGUYEN, Dau Khiem, 80687 München (DE); KARATZAS, Christos, 85229 Markt Indersdorf (DE)
(74) Vertreter: 2s-ip Schramm Schneider Bertagnoll Patent- und Rechtsanwälte Part mbB
(86) Internationale Anmeldenummer: PCT/EP2015/052959
(87) Internationale Veröffentlichungsnummer: WO 2015/121346

(56) Entgegenhaltungen:
- DE-A1- 19 925 910
- DE-A1-102006 012 311
- LUC BOUGANIM ET AL: "Chip-Secured Data Access: Confidential Data on Untrusted Servers", PROCEEDINGS OF THE INTERNATIONAL CONFERENCE ON VERY LARGEDATA BASES, XX, XX, 1. Januar 2002 (2002-01-01), Seiten 1-12, XP002427422,

## Beschreibung

### Gegenstand der Erfindung

Die Erfindung betrifft ein Verfahren zum Sichern von Werten von Fremdschlüsselattributen eines Datensatzes vor einem unberechtigten Zugriff sowie ein Verfahren zum Herstellen und/oder Wiederherstellen solcher Fremdschlüsselattribute in einem flüchtigen Datenspeicher aus einer Datenbank. Ferner betrifft die Erfindung ein System, das angepasst ist, Werte von Fremdschlüsselattributen eines Datensatzes vor unberechtigtem Zugriff zu sichern und Werte von Fremdschlüsselattributen in einem flüchtigen Datenspeicher wiederherzustellen.

### Hintergrund der Erfindung und Stand der Technik

Es ist bekannt, Daten bzw. Datensätze in einer Datenbank kryptografisch zu verschlüsseln. Hierdurch soll ein unberechtigter Zugriff auf die in der Datenbank gespeicherten Datensätze verhindert werden. Allerdings werden die Daten in der Datenbank von dem Betreiber der Datenbank mit einem dem Datenbankbetreiber bekannten kryptografischen Schlüssel verschlüsselt und bei einem Zugriff auf die Daten mit einem ebenfalls dem Datenbankbetreiber bekannten kryptografischen Schlüssel entschlüsselt. Der Datenbankbetreiber hat also die Möglichkeit, jederzeit auf die Daten in der Datenbank zuzugreifen, selbst wenn der Datenbankbetreiber nicht Inhaber der Daten ist.

Damit einher geht ein weiterer Nachteil, dass der Datenbankbetreiber nicht nur die Datensätze einzelner Relationen (Datenbanktabellen) lesen kann, sondern auch die gegebenenfalls zwischen zwei oder mehreren Relationen vorhandenen Verknüpfungen lesen und auswerten kann, sodass der Datenbankbetreiber aus diesen Verknüpfungen auch Rückschlüsse, beispielsweise über ein Nutzerverhalten, ableiten kann. Beispielsweise können in einer ersten Relation personenbezogene Nutzerdaten und in einer zweiten Relation die Stammdaten für ein elektronisches Postfach gespeichert sein. In einer ersten Relation können Informationen gespeichert sein (als Fremdschlüssel auf die zweite Relation), die angeben, auf welches Postfach der zweiten Relation der jeweilige Nutzer Zugriff hat. Die Werte der Fremdschlüssel werden zusammen mit dem Datensatz, zu dem die Werte gehören, in der Datenbank gespeichert, d.h. die Werte der Fremdschlüssel und die Werte der Nicht-Schlüsselattribute bilden gegebenenfalls zusammen mit einem Primärschlüssel einen einzelnen Datensatz, der in einer Relation bzw. Datenbanktabelle gespeichert wird.

Haben beispielsweise zwei Nutzer der ersten Relation Zugriff auf ein und dasselbe Postfach in der zweiten Relation, so kann der Betreiber der Datenbank hieraus die Information ableiten, dass diese beiden Nutzer in Kontakt stehen und möglicherweise über dieses Postfach Informationen austauschen. Diese zusätzlichen Informationen werden auch Metadaten genannt.

Durch das Verschlüsseln der Datenbank alleine kann demnach nicht verhindert werden, dass der Betreiber der Datenbank an diese oder ähnliche Metainformationen, die sich aus den Beziehungen zwischen zwei oder mehreren Relationen in der Datenbank ergeben, gelangt.

Aus Luc Bouganim et al "Chip-Secured Data Access: Confidential Data on Untrusted Servers", Proceedings of the 28th VLDB Conference, Hong Kong, China, 2002, ist ein Verfahren bekannt, bei dem mit einer Smartcard gesichert auf Daten zugegriffen werden kann, die in einer Datenbank auf einem Server gespeichert sind, wobei die Daten verschlüsselt sein können. Hierbei wird davon ausgegangen, dass es nicht möglich ist, die gesamte Datenbank auf die Smartcard zu übertragen, um dann auf der Smartcard die benötigten Datenbankoperationen auszuführen. Es wird vorgeschlagen einen Teil der Datenbankoperationen auf dem Server und einen Teil auf der Smartcard auszuführen.

### Aufgabe der Erfindung

Aufgabe der vorliegenden Erfindung ist es daher, Verfahren und Systeme bereitzustellen, mit denen effektiv und effizient verhindert werden kann, dass einerseits unberechtigte Personen und andererseits die Betreiber von Datenbanken an Metainformationen, die sich aus den Beziehungen zweier oder mehrerer Datenbankrelationen ergeben, gelangen können.

### Erfindungsgemäße Lösung

Diese Aufgabe wird erfindungsgemäß durch die Verfahren, das System und ein Computerprogrammprodukt nach den unabhängigen Ansprüchen gelöst. Vorteilhafte Ausgestaltungen und Weiterbildungen der Erfindung sind in den jeweiligen abhängigen Ansprüchen angegeben.

### Kurzbeschreibung der Figuren

Einzelheiten und Merkmale der Erfindung sowie konkrete Ausgestaltungen der Erfindung ergeben sich aus der nachfolgenden Beschreibung in Verbindung mit der Zeichnung. Es zeigt:
- Fig. 1: ein erstes Beispiel einer Datenstruktur zur Verdeutlichung der erfindungsgemäßen Verfahren;
- Fig. 2: ein zweites Beispiel einer Datenstruktur zur Verdeutlichung einer zweiten Variante der erfindungsgemäßen Verfahren; und
- Fig. 3: ein drittes Beispiel einer Datenstruktur zur Verdeutlichung einer dritten Variante der erfindungsgemäßen Verfahren.

### Detaillierte Beschreibung der Erfindung

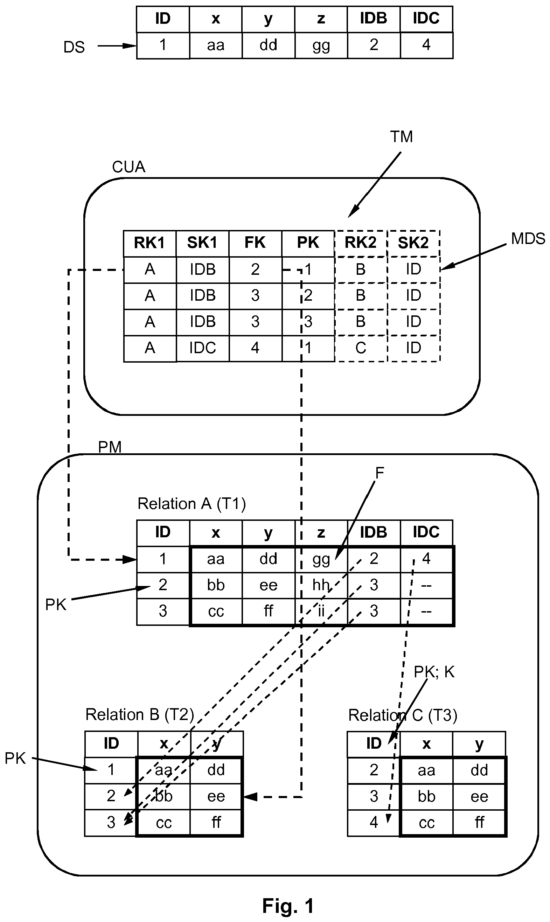

**Fig. 1** zeigt eine Datenstruktur, mit der in vorteilhafter Weise Werte von Fremdschlüsselattributen eines Datensatzes DS vor einem unberechtigten Zugriff gesichert werden können.

Anhand des Datensatzes DS wird das erfindungsgemäße Verfahren zum Sichern von Werten von Fremdschlüsselattributen vor einem unberechtigten Zugriff näher beschrieben. Der Datensatz umfasst hier einen Primärschlüssel (Spalte ID), drei Attribute, die keine Primär- oder Fremdschlüsselattribute sind (Spalten x, y und z), ein Fremdschlüsselattribut (Spalte IDB), mit dem ein Datensatz in der Relation B referenziert wird, und ein weiteres Fremdschlüsselattribut (Spalte IDC), mit dem ein Datensatz in der Relation C referenziert wird.

Das System, in dem dieser Datensatz und die Referenzen dieses Datensatzes auf die Relationen B und C für den Zugriff durch eine hier nicht gezeigte Anwendung gespeichert werden, umfasst einen flüchtigen Datenspeicher CUA und einen nichtflüchtigen Datenspeicher bzw. permanenten Datenspeicher PM. Der flüchtige Datenspeicher CUA ist Bestandteil einer gesicherten und versiegelten Infrastruktur, mit der gewährleistet wird, dass kein unberechtigter Zugriff auf den flüchtigen Datenspeicher CUA möglich ist. Die gesicherte und versiegelte Infrastruktur kann eine Anzahl redundanter und verteilter Rechnerressourcen umfassen, welche jeweils eine Anzahl sogenannter Trusted-Plattform-Module (TPM), Leistungsschalter zur Unterbrechung der Stromversorgung der gesamten Rechnerressourcen, elektromechanische Schlösser, eine Anzahl von Sensoren, mit denen der Zugang zu den Rechnerressourcen überwacht werden kann, umfassen können.

In dem flüchtigen Datenspeicher CUA wird erfindungsgemäß eine Mapping-Relation TM gespeichert, wobei die Mapping-Relation TM eine Datenbanktabelle einer in dem flüchtigen Datenspeicher CUA gespeicherten Datenbank sein kann. Bei dieser Datenbank kann es sich beispielsweise um eine In-Memory-Datenbank handeln, die ihre Daten in dem flüchtigen Datenspeicher CUA speichert. Die in dem flüchtigen Datenspeicher CUA gespeicherten Daten können in einem weiteren hier nicht gezeigten flüchtigen Datenspeicher repliziert werden, wobei dieser weitere flüchtige Datenspeicher Bestandteil einer weiteren gesicherten und versiegelten Infrastruktur sein kann.

In dem flüchtigen Datenspeicher CUA können auch kryptografische Schlüssel gespeichert werden, die für das Verschlüsseln bzw. Entschlüsseln des Datensatzes DS vorgesehen sein können.

Gemäß der vorliegenden Erfindung wird jedenfalls die Mapping-Relation TM ausschließlich in dem flüchtigen Datenspeicher CUA gespeichert, sodass nach einer Unterbrechung der Stromversorgung die Mapping-Relation TM vollständig gelöscht wird. Sofern auch die kryptografischen Schlüssel in dem flüchtigen Datenspeicher CUA gespeichert sind, werden nach einer Stromunterbrechung auch diese vollständig gelöscht. Das Löschen der Mapping-Relation TM kann etwa dann erforderlich sein, wenn sich jemand unberechtigt bzw. unbefugt Zutritt bzw. Zugang zu einer Rechnerressource verschafft, die Bestandteil der versiegelten Infrastruktur ist.

Um einen unberechtigten Zutritt zur versiegelten Infrastruktur feststellen zu können, ist es vorgesehen, dass die Rechnerressourcen der versiegelten Infrastruktur mit einer sorgenannten Versiegelungsüberwachungseinrichtung (sealing control) verbunden sind, welche die elektromechanischen Komponenten überwacht. Stellt die Versiegelungsüberwachungseinrichtung einen unbefugten Zugang zu einer Rechnerressource fest, kann sie die Stromversorgung zu der kompromittierten Rechnerressource und zu dem flüchtigen Datenspeicher CUA unterbrechen. Damit ist gewährleistet, dass sich aus einer kompromittierten Rechnerressource und aus dem flüchtigen Datenspeicher CUA keinerlei Daten der Mapping-Relation TM herstellen lassen können und ein Zugriff auf die in dem flüchtigen Datenspeicher CUA gespeicherten kryptografischen Schlüssel verhindert wird. Die Versiegelungsüberwachungseinrichtung kann auch angepasst sein, um unberechtigte Zugriffe über ein Datennetz auf die versiegelte Infrastruktur zu erkennen. Auch in diesem Fall werden die kompromittierten Rechnerressourcen und der flüchtige Datenspeicher CUA von der Stromversorgung getrennt.

Erfindungsgemäß werden die Rechnerressourcen der versiegelten Infrastruktur und die flüchtigen Datenspeicher in der versiegelten Infrastruktur auch dann von der Stromversorgung unterbrochen, wenn an bzw. in der versiegelten Infrastruktur Wartungsarbeiten durchgeführt werde müssen. Damit ist gewährleistet, dass auch der Betreiber der versiegelten Infrastruktur bzw. der Betreiber der Datenbank in der die Mapping-Relation TM gespeichert wird, keinen Zugriff auf die Mapping-Relation TM erhält.

Ferner ist es erfindungsgemäß vorgesehen, dass eine Anwendung, beispielsweise eine Softwareanwendung, die auf die in der Mapping-Relation TM gespeicherten Daten zugreifen muss, ausschließlich in der versiegelten Infrastruktur ausgeführt wird. Damit kann bei entsprechend zertifizierten Anwendungen auch gewährleistet werden, dass die Anwendungen keine der in der Mapping-Relation TM gespeicherten Daten unbefugt nach außen geben können.

In dem permanenten bzw. nichtflüchtigen Datenspeicher PM werden die Nutzdaten bzw. Stammdaten des Datensatzes DS gespeichert, wobei für eine Speicherung dieser Daten ein Datenbankmanagementsystem vorgesehen sein kann. Um einen unberechtigten Zugriff auf die Fremdschlüsselattribute des Datensatzes DS in dem nichtflüchtigen Speicher PM zu verhindern, ist es vorgesehen, dass die Fremdschlüsselattribute ausschließlich in der Mapping-Relation TM in dem flüchtigen Speicher CUA gespeichert werden.

Ein zusätzliches Speichern dieser Fremdschlüsselattribute in dem nichtflüchtigen bzw. permanenten Speicher PM ist erfindungsgemäß lediglich dazu vorgesehen, um die Mapping-Relation TM in dem flüchtigen Datenspeicher CUA wieder herzustellen, falls der flüchtige Datenspeicher CUA beispielsweise aufgrund eines erkannten Kompromittierungsversuches von der Stromversorgung getrennt wurde. Mit zusätzlichen Sicherungsmaßnahmen, die nachfolgend näher beschrieben werden, ist allerdings gewährleistet, dass der Betreiber der in dem permanenten Speicher PM gespeicherten Datenbank keinen Zugriff auf die Werte dieser Fremdschlüsselattribute hat.

Bei dem in Fig. 1 gezeigten Beispiel einer Datenstruktur zum Sichern von Werten von Fremdschlüsselattributen eines Datensatzes vor einem unberechtigten Zugriff weist eine in dem nichtflüchtigen bzw. permanenten Speicher PM vorgesehene Datenbank drei Relationen (Relation A, Relation B und Relation C) auf. Eine Relation wird umgangssprachlich auch als Tabelle bzw. Datenbanktabelle bezeichnet. In der Relation A ist der Datensatz DS gespeichert. Der in der Relation A gespeicherte Datensatz DS (Datensatz mit der ID = 1) weist einen Fremdschlüssel IDB mit dem Wert 2 und einen weiteren Fremdschlüssel IDC mit dem Wert 4 auf. Mit dem Fremdschlüssel IDB wird die Relation B referenziert, wobei in dem vorliegenden Beispiel durch den Wert des Fremdschlüssels IDB der Datensatz mit der ID = 2 in Relation B referenziert wird. Mit dem zweiten Fremdschlüssel IDC wird die Relation C referenziert, wobei mit dem Wert 4 des Fremdschlüssels IDC der Datensatz mit der ID = 4 in der Relation C referenziert wird. Bei den Referenzen bzw. Verknüpfungen zwischen den Relationen B und C und der Relation A handelt es sich um sogenannte l:n-Verknüpfungen, wobei das erfindungsgemäße Verfahren bzw. die hierfür notwendigen Datenstrukturen auch für 1:1-Verknüpfungen bzw. n:m-Verknüpfungen anwendbar ist.

Zu dem in der Relation A gespeicherten Datensatz DS wird ein Mapping-Datensatz MDS in der Mapping-Relation TM gespeichert. Die Mapping-Relation TM weist in dem in Fig. 1 gezeigten Beispiel sechs Attribute bzw. sechs Spalten auf. In einer Spalte RK1 wird eine erste Relationskennung gespeichert, wobei diese Relationskennung angibt, zu welcher Relation der Mapping-Datensatz MDS gehört. Mit dem Wert A wird beispielsweise angegeben, dass der Mapping-Datensatz MDS zur Relation A gehört.

In einer weiteren Spalte ist eine erste Spaltenkennung SK1 gespeichert, die angibt, welches Fremdschlüsselattribut der in der ersten Relationskennung RK1 angegebenen ersten Relation in dem Mapping-Datensatz MDS gespeichert ist.

In einer weiteren Spalte SK ist der Wert des durch die erste Spaltenkennung SK1 referenzierten Fremdschlüssels in der von der ersten Relationskennung RK1 referenzierten Relation gespeichert.

In einer weiteren Spalte PK ist der Wert des Primärschlüsselattributes des in der Relation A gespeicherten Datensatzes DS gespeichert.

Mit den Attributen RK1, SK1, SK und PK kann demnach ein Wert eines bestimmten Fremdschlüsselattributes eines bestimmten Datensatzes in einer bestimmten Relation identifiziert werden. Bei dem in Fig. 1 gezeigten Beispiel wird durch den ersten Mapping-Datensatz MDS der Wert des Fremdschlüsselattributes IDB des Datensatzes mit der ID = 1 in der Relation A identifiziert bzw. referenziert.

Durch das Vorsehen der ersten Relationskennung RK1 und der ersten Spaltenkennung SK1 in der Mapping-Relation TM können Werte von Fremdschlüsselattributen unterschiedlicher Relationen und Werte unterschiedlicher Fremdschlüsselattribute einer Relation in einer einzigen Mapping-Relation TM gespeichert werden. Weil die Mapping-Relation TM in dem nicht flüchtigen Speicher CUA gespeichert ist, beispielsweise als Datenbanktabelle einer In-Memory-Datenbank, kann die Zugriffszeit auf einen bestimmten Mapping-Datensatz MDS, insbesondere bei Vorsehen geeigneter Indexstrukturen, auch bei einer sehr großen Anzahl von Mapping-Datensätzen gering gehalten werden.

Der von dem ersten Mapping-Datensatz MDS in der Mapping-Relation TM referenzierte Datensatz in der Relation A ist durch den von der Mapping-Relation TM zur Relation A verlaufenden gestrichelten Pfeil angegeben. Der von dem Fremdschlüsselattribut in dem ersten Mapping-Datensatz MDS referenzierte Datensatz in der Relation B ist durch den von dem Fremdschlüsselattribut zur Relation B verlaufenden gestrichelten Pfeil dargestellt.

Eine in Fig. 1 nicht gezeigte Anwendung, die in der versiegelten Infrastruktur zur Ausführung gebracht wird und die auf den ersten Datensatz in der Relation A zugreifen möchte und hierbei die Fremdschlüssel der Fremdschlüsselattribute IDB und IDC auflösen möchte, beispielsweise durch einen sogenannten Join einer SQL-Abfrage, ermittelt die Werte der Fremdschlüsselattribute des ersten Datensatzes der Relation A in der Mapping-Relation TM, indem die Anwendung die diesen Fremdschlüsselattributen zugeordneten Mapping-Datensätze MDS in der Mapping-Relation TM ermittelt. In dem in Fig. 1 gezeigten Beispiel würde für den ersten Datensatz der Relation A für das Fremdschlüsselattribut IDB der ersten Mapping-Datensatz in der Mapping-Relation TM und für das Fremdschlüsselattribut IDC der vierte Mapping-Datensatz in der Relation TM ermittelt werden.

Mit den so ermittelten Mapping-Datensätzen stehen der Anwendung die Werte der Fremdschlüsselattribute IDB und IDC des ersten Datensatzes der Relation A zur Verfügung, sodass die Anwendung einen entsprechenden Join einer SQL-Anfrage erstellen kann. Damit können also Beziehungen zwischen Datensätzen mehrerer Relationen aufgelöst werden, ohne dass die Werte der Fremdschlüsselattribute in den Relationen selbst gespeichert werden müssen. Weil die Werte der Fremdschlüsselattribute eines Datensatzes nicht in den Relationen gespeichert werden müssen, ist gewährleistet, dass selbst wenn eine unberechtigte Person oder der Betreiber der in dem nichtflüchtigen Datenspeicher PM gespeicherten Datenbank Zugriff auf die in den Relationen gespeicherten Daten hat, diese keine Information über die Beziehungen zwischen den in den Relationen gespeicherten Datensätzen erhält. Damit ist ferner gewährleistet, dass aus den Beziehungen zwischen den in den Relationen gespeicherten Datensätzen keine Metainformationen abgeleitet bzw. gewonnen werden können, die beispielsweise Rückschlüsse auf das Verhalten oder Aktivitäten bestimmter Personen ermöglichen würden. Wären beispielsweise bei dem in Fig. 1 gezeigten Beispiel in der Relation A Benutzerdaten gespeichert, wobei in dem Fremdschlüsselattribut IDB ein dem jeweiligen Benutzer zugeordnetes Postfach gespeichert ist, könnte beispielsweise der Betreiber der Datenbank die Information erlangen, dass den Benutzern mit der ID 2 und 3 dasselbe Postfach (mit der ID = 3) zugeordnet ist, was den Betreiber der Datenbank nahelegen würde, dass diese Benutzer in irgendeiner Form in Kontakt stehen und gegebenenfalls über das ihnen zugeordnete Postfach Nachrichten austauschen. Ohne die Angabe der Fremdschlüsselattribute in den Datensätzen der Relation A erhält der Betreiber der Datenbank weder die Information, welches Postfach welchem Benutzer zugeordnet ist, noch kann er aus einer solchen Zuordnung irgendwelche Metainformationen oder Rückschlüsse ableiten.

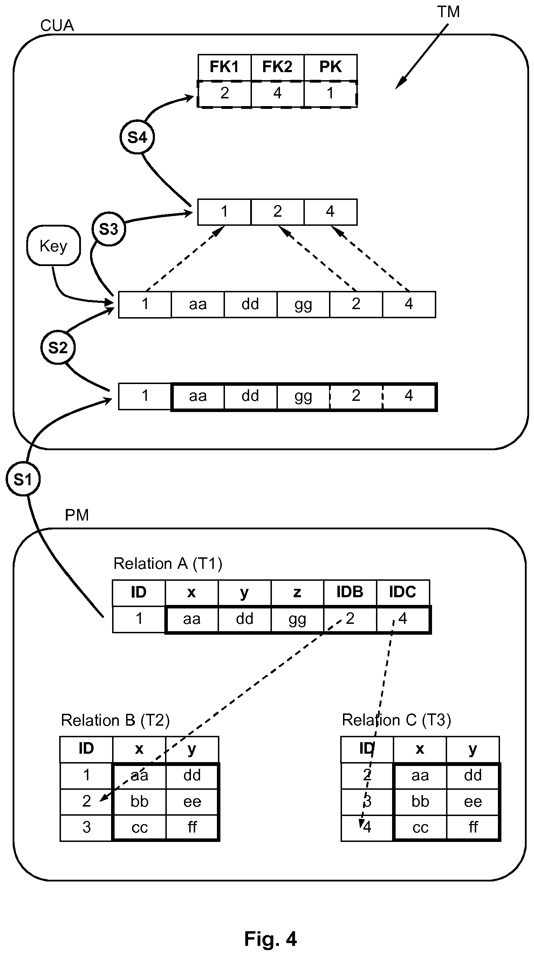

In dem in Fig. 1 gezeigten Beispiel einer Datenstruktur sind die Fremdschlüsselattribute bzw. die Werte der Fremdschlüsselattribute IDB und IDC ebenfalls in der Relation A in dem nichtflüchtigen Datenspeicher PM gespeichert. Das Speichern der Werte der Fremdschlüsselattribute in den Relationen in dem nichtflüchtigen Datenspeicher PM ist ausschließlich dazu vorgesehen, um die Mapping-Relation TM in dem flüchtigen Datenspeicher CUA gegebenenfalls wiederherstellen zu können, falls beispielsweise die Stromversorgung zu dem flüchtigen Datenspeicher CUA unterbrochen wurde. Das Wiederherstellen der Mapping-Relation TM in dem flüchtigen Datenspeicher CUA wird mit Bezug auf Fig. 4 näher beschrieben.

Um zu gewährleisten, dass der Betreiber der in dem nichtflüchtigen Datenspeicher gespeicherten Datenbank keinen Zugriff auf die Werte der Fremdschlüsselattribute IDB und IDC hat, ist es erfindungsgemäß vorgesehen, dass zumindest die Werte der Fremdschlüsselattribute kryptografisch verschlüsselt sind, wobei für das Verschlüsseln der Fremdschlüsselattribute ausschließlich kryptografische Schlüssel der Besitzer der jeweiligen Datensätze verwendet werden. Damit ist gewährleistet, dass auch der Betreiber der Datenbank die verschlüsselten Attribute eines Datensatzes nicht entschlüsseln kann.

Zusätzlich zu den Werten der Fremdschlüsselattribute können auch weitere Attribute, die keine Fremdschlüsselattribute oder Schlüsselattribute sind, kryptografisch mit einem Verschlüsselungsschlüssel des jeweiligen Inhabers des Datensatzes verschlüsselt werden. In dem in Fig. 1 gezeigten Beispiel sind die kryptografisch verschlüsselten Attribute durch einen fetten Rahmen gekennzeichnet, wobei nicht nur Attribute der Relation A, die Fremdschlüsselattribute enthält, verschlüsselt sind, sondern auch Attribute der Relationen B und C.

Erfindungsgemäß nicht verschlüsselt sind hingegen die Werte der Primärschlüssel PK der jeweiligen Datensätze in den Relationen, weil aus diesen Werten ohnehin keinerlei Information abgeleitet werden kann. Ferner wird dadurch gewährleistet, dass für das Erzeugen eines Join einer SQL-Abfrage die Werte der Primärschlüsselattribute nicht erst entschlüsselt werden müssen, was einen erheblichen Geschwindigkeitsvorteil mit sich bringt.

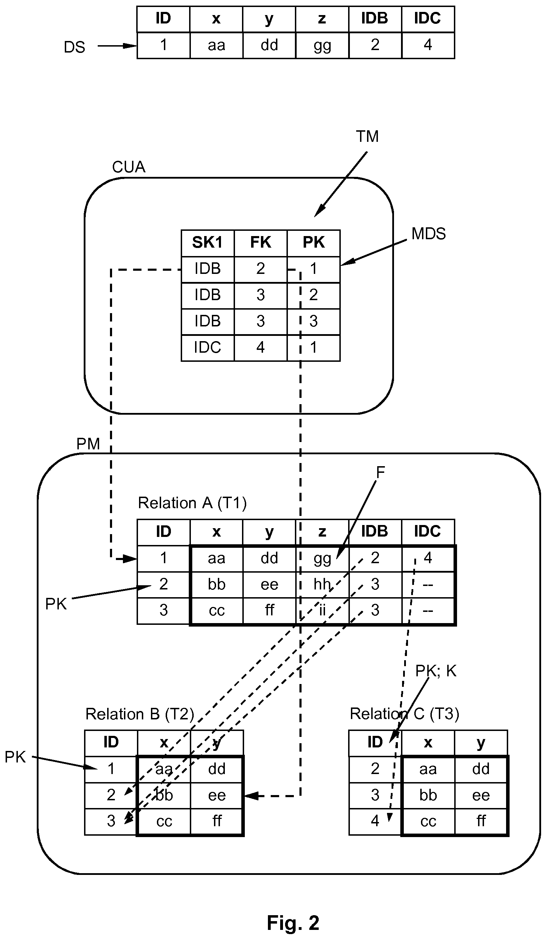

**Fig. 2** zeigt eine alternative Datenstruktur für das Sichern von Werten von Fremdschlüsselattributen eines Datensatzes vor einem unberechtigten Zugriff. Die Relationen A, B und C sind hier identisch zu dem in Fig. 1 gezeigten Beispiel einer erfindungsgemäßen Datenstruktur, d.h. diese drei Relationen weisen dieselben Attribute und dieselben Attributswerte auf, wie in Fig. 1.

Die in Fig. 2 gezeigte erfindungsgemäße Datenstruktur unterscheidet sich von der in Fig. 1 gezeigten Datenstruktur in der Struktur der Mapping-Relation TM in dem flüchtigen Datenspeicher CUA. Ein weiterer Unterschied liegt darin, dass bei dem in Fig. 2 gezeigten Beispiel einer erfindungsgemäßen Datenstruktur für jede Relation in dem nichtflüchtigen Datenspeicher PM, die Fremdschlüsselattribute aufweist, in dem flüchtigen Datenspeicher CUA jeweils eine Mapping-Relation TM vorgesehen ist. Weisen beispielsweise drei Relationen in dem nichtflüchtigen Datenspeicher PM Fremdschlüsselattribute auf, so sind in dem flüchtigen Datenspeicher CUA ebenfalls drei Mapping-Relationen vorgesehen. Weil in dem in Fig. 2 gezeigten Beispiel in dem nichtflüchtigen Datenspeicher PM lediglich die Relation A Fremdschlüsselattribute (IDB und IDC) aufweist, ist in dem flüchtigen Datenspeicher CUA nur eine Mapping-Relation TM vorgesehen.

Im Unterschied zu der in Fig. 1 gezeigten Mapping-Relation, in der die Werte aller Fremdschlüsselattribute aller Relationen gespeichert sind, sind in einer Mapping-Relation gemäß Fig. 2 nur die Attributswerte der Fremdschlüsselattribute einer einzigen Relation gespeichert. Hierfür weist die Mapping-Relation TM drei Attribute bzw. Spalten auf. In einer ersten Spalte ist eine erste Spaltenkennung SK1 gespeichert, die angibt, auf welches Fremdschlüsselattribut sich der jeweilige Mapping-Datensatz MDS in der Mapping-Relation TM bezieht. Beispielsweise bezieht sich der erste Mapping-Datensatz MDS in der Mapping-Relation TM auf das Fremdschlüsselattribut IDB in der Relation A. Weil für jede Relation mit Fremdschlüsselattributen genau eine Mapping-Relation TM in dem flüchtigen Speicher CUA vorgesehen ist und weil bekannt ist, welche Mapping-Relation in dem flüchtigen Datenspeicher CUA welcher Relation in dem nichtflüchtigen Datenspeicher PM zugeordnet ist, kann in den Mapping-Relationen auf ein Attribut, das diese Zuordnung angibt, verzichtet werden.

In einer weiteren Spalte der Mapping-Relation TM wird der Wert des in der ersten Spaltenkennung SK1 angegebenen Fremdschlüsselattributs gespeichert. In einer dritten Spalte wird der Wert des Primärschlüsselattributs PK der Relation A gespeichert, sodass jedem Mapping-Datensatz MDS in der Mapping-Relation TM genau ein Datensatz in der Relation A zugeordnet ist. Über diese eindeutige Zuordnung kann eine Applikation beispielsweise ermitteln, welchen Wert das Fremdschlüsselattribut IDB des Datensatzes mit dem Primärschlüssel PK = 1 hat.

Durch das Vorsehen der ersten Spaltenkennung SK1 kann in der Mapping-Relation TM für jeden Wert der Fremdschlüsselattribute der Relation A ein Mapping-Datensatz MDS gespeichert werden. Beispielsweise sind in den ersten drei Mapping-Datensätzen die Werte des Fremdschlüsselattributes IDB und in dem vierten Datensatz der Wert des Fremdschlüsselattributes IDC gespeichert.

Das Erzeugen eines Join für eine SQL-Abfrage erfolgt in der Weise, wie bereits mit Bezug auf Fig. 1 erläutert.

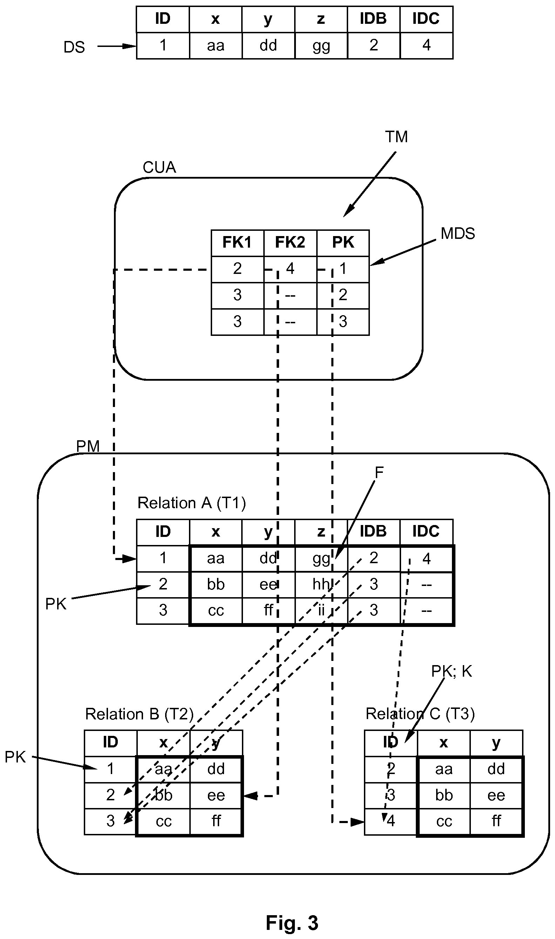

**Fig. 3** zeigt eine weitere Alternative einer Datenstruktur zum Sichern von Werten von Fremdschlüsselattributen eines Datensatzes vor einem unberechtigten Zugriff. Die in dem nichtflüchtigen Datenspeicher PM gespeicherten Relationen A, B und C sind hinsichtlich ihrer Struktur und ihres Inhalts identisch zu den in Fig. 1 und Fig. 2 gezeigten Relationen A, B und C.

Wie bei Fig. 2 ist auch bei dem Beispiel nach Fig. 3 in dem flüchtigen Datenspeicher CUA für jede Relation in dem nichtflüchtigen Datenspeicher PM, die Fremdschlüsselattribute aufweist, eine Mapping-Relation TM in dem flüchtigen Datenspeicher CUA vorgesehen. Im Unterschied zu dem in Fig. 2 gezeigten Beispiel sind allerdings bei dem in Fig. 3 gezeigten Beispiel einer Datenstruktur die Werte aller Fremdschlüsselattribute eines Datensatzes der Relation A in einem einzigen Mapping-Datensatz MDS in der Mapping-Relation TM gespeichert. Weil sämtliche Attributswerte der Fremdschlüsselattribute der Datensätze der Relation A in einem einzigen Mapping-Datensatz MDS gespeichert sind, kann bei der in Fig. 3 gezeigten Mapping-Relation TM auf die erste Spaltenkennung SK1 verzichtet werden.

Mit dem Primärschlüssel PK wird eine Zuordnung des Mapping-Datensatzes MDS zu einem Datensatz in der Relation A hergestellt. In weiteren Spalten SK1 und SK2 der Mapping-Relation TM sind die Werte der Fremdschlüsselattribute IDB und IDC für den jeweiligen durch den Fremdschlüssel PK identifizierten Datensatz der Relation A gespeichert. Die Anzahl der Spalten zum Speichern von Werten zu Fremdschlüsselattributen in der Mapping-Relation TM variiert demnach in Abhängigkeit von der Anzahl der der jeweiligen Mapping-Relation zugeordneten Relation in dem nichtflüchtigen Datenspeicher.

Mit **Fig. 4** wird anhand eines in der Relation A gespeicherten Datensatzes das erfindungsgemäße Verfahren zum Herstellen und/oder Wiederherstellen einer Mapping-Relation TM in dem flüchtigen Datenspeicher CUA näher erläutert.

Wie vorstehend mit Bezug auf Fig. 1 erläutert, können die in dem flüchtigen Datenspeicher CUA gespeicherten Mapping-Relationen TM in einen redundanten flüchtigen Datenspeicher repliziert werden, wobei der redundante flüchtige Datenspeicher entweder in derselben versiegelten Infrastruktur oder in einer anderen versiegelten Infrastruktur vorgesehen sein kann.

Für den Fall, dass der flüchtige Datenspeicher CUA beispielsweise im Falle einer Kompromittierung oder im Falle von Wartungsarbeiten von der Stromversorgung getrennt wird und damit sämtliche Daten in dem flüchtigen Datenspeicher CUA gelöscht werden, können die Mapping-Relationen aus dem redundanten flüchtigen Datenspeicher in den flüchtigen Datenspeicher CUA kopiert werden. Werden allerdings sämtliche flüchtigen Datenspeicher von der Stromversorgung getrennt, ist es notwendig, die Mapping-Relationen in den flüchtigen Datenspeicher und gegebenenfalls in den redundanten flüchtigen Datenspeichern aus den in dem permanenten Datenspeicher PM gespeicherten Relationen wiederherzustellen.

In Fig. 4 ist eine Relation A in dem nicht flüchtigen Datenspeicher PM gezeigt, die einen Datensatz aufweist, für den ein entsprechender Mapping-Datensatz in der Mapping-Relation TM wiederhergestellt werden soll.

Der Datensatz in der Relation A weist einen Primärschlüssel ID, zwei Fremdschlüsselattribute IDB und IDC und drei Attribute x, y und z, die keine Fremdschlüsselattribute und keine Schlüsselattribute sind, auf. In dem in Fig. 4 gezeigten Beispiel sind die Fremdschlüsselattribute und die Nichtschlüsselattribute mit einem kryptografischen Schlüssel des Besitzers des Datensatzes verschlüsselt worden. Erfindungsgemäß ist es aber nur notwendig, dass die Werte der Fremdschlüsselattribute mit dem Schlüssel des Besitzers des Datensatzes kryptografisch verschlüsselt sind.

In einem ersten Schritt S1 wird der Datensatz der Relation A in den flüchtigen Datenspeicher CUA der versiegelten Infrastruktur kopiert. Dies ist notwendig, weil für das Herstellen bzw. Wiederherstellen der Mapping-Relation der Datensatz, jedenfalls aber die Werte der Fremdschlüsselattribute des Datensatzes entschlüsselt werden müssen, wobei das Entschlüsseln des Datensatzes in der gesicherten und versiegelten Infrastruktur vorgenommen wird. Dadurch ist gewährleistet, dass die Werte der Fremdschlüsselattribute ausschließlich im flüchtigen Datenspeicher CUA der versiegelten Infrastruktur in unverschlüsselter Form vorliegen. Würde die versiegelte Infrastruktur bzw. der flüchtige Datenspeicher CUA während eines Wiederherstellungsvorganges der Mapping-Relation TM kompromittiert werden, würden auch die unverschlüsselten Werte der Fremdschlüsselattribute unverzüglich gelöscht werden.

In einem weiteren Schritt S2 wird der in den flüchtigen Datenspeicher CUA kopierte Datensatz entschlüsselt, wobei für das Entschlüsseln des Datensatzes der dem Besitzer des Datensatzes zugeordnete kryptografische Schlüssel (Entschlüsselungsschlüssel) verwendet wird. Wichtig ist hierbei, dass der dem Besitzer des Datensatzes zugeordnete kryptografische Schlüssel zum Entschlüsseln des Datensatzes ausschließlich in der versiegelten Infrastruktur bzw. in dem flüchtigen Datenspeicher CUA gespeichert ist.

Weil der kryptografische Schlüssel zum Entschlüsseln des Datensatzes nur von dem Besitzer des kryptografischen Schlüssels verwendet werden kann (weil der Besitzer des kryptografischen Schlüssels beispielsweise für die Verwendung des Schlüssels ein Passwort eingeben muss), kann der Datensatz in dem flüchtigen Datenspeicher CUA auch nur dann entschlüsselt werden, wenn der Besitzer des Datensatzes an dem System angemeldet ist. Der Betreiber der versiegelten Infrastruktur bzw. der Betreiber der in dem nichtflüchtigen Datenspeicher PM gespeicherten Datenbank kann demnach ohne Hilfe der Besitzer der in den jeweiligen Relationen gespeicherten Datensätze die Mapping-Relationen in dem flüchtigen Datenspeicher CUA nicht herstellen, weil weder der Betreiber der versiegelten Infrastruktur noch der Betreiber der Datenbank die hierfür notwendigen kryptografischen Schlüssel der Besitzer der Datensätze verwenden kann. Demnach kann weder der Betreiber der versiegelten Infrastruktur noch der Betreiber der Datenbank beispielsweise in einem Batch-Job die gesamten Mapping-Relationen wieder herstellen. Das Wiederherstellen der Mapping-Relationen in dem flüchtigen Datenspeicher CUA kann nur sukzessive erfolgen, indem jeweils für jene Datensätze in der Datenbank die Mapping-Datensätze in den Mapping-Relationen wieder hergestellt werden, die einem eingeloggten bzw. sich dem System gegenüber authentifizierten Besitzer bzw. Nutzer zugeordnet sind.

Nach dem Schritt S2 liegt der Datensatz in dem flüchtigen Speicher CUA in unverschlüsselter Form vor. In einem nächsten Schritt S3 werden aus dem entschlüsselten Datensatz jene Werte extrahiert, die für das Erzeugen eines entsprechenden Mapping-Datensatzes in der Mapping-Relation TM benötigt werden. Bei dem in Fig. 4 gezeigten Beispiel sind dies die Werte des Primärschlüssels ID und die Werte der Fremdschlüsselattribute IDB und IDC. Weist die wiederherzustellende Mapping-Relation TM die in Fig. 1 oder Fig. 2 gezeigte Datenstruktur auf, müssen die hierfür erforderlichen zusätzlichen Attributswerte in dem Schritt S3 ebenfalls ermittelt werden. Beispielsweise wäre es bei der in Fig. 4 gezeigten Datenstruktur notwendig, dass in dem Schritt S3 auch die erste Spaltenkennung SK1 ermittelt wird, um einen entsprechenden Mapping-Datensatz in die in Fig. 2 gezeigte Mapping-Relation einfügen zu können.

Nachdem die für den in die Mapping-Relation einzufügenden Mapping-Datensatz erforderlichen Attributswerte ermittelt worden sind, werden die Attribute bzw. wird der so gebildete Mapping-Datensatz MDS in die Mapping-Relation TM in dem Schritt S4 eingefügt. Anschließend können sämtliche nicht mehr benötigte Daten, beispielsweise der entschlüsselte Datensatz in dem flüchtigen Datenspeicher CUA gelöscht werden.

Die Schritte S1 bis S4 werden für jeden Datensatz in sämtlichen Relationen, die Fremdschlüsselattribute aufweisen, wiederholt.

Vor dem Kopieren des Datensatzes in den flüchtigen Datenspeicher CUA in dem Schritt S1 oder vor dem Entschlüsseln des in den flüchtigen Datenspeicher kopierten Datensatzes in dem Schritt S2 kann geprüft werden, ob für diesen Datensatz bereits ein Mapping-Datensatz in der entsprechenden Mapping-Relation TM vorhanden ist. Ist kein entsprechender Mapping-Datensatz vorhanden, wird das Wiederherstellungsverfahren fortgesetzt. Anderenfalls kann das Wiederherstellungsverfahren abgebrochen werden.

Nachdem sämtliche Mapping-Relationen in dem flüchtigen Datenspeicher CUA wieder hergestellt worden sind, kann es vorteilhaft sein, die in dem flüchtigen Datenspeicher CUA vorhandenen Mapping-Relationen in einen oder mehrere redundante flüchtige Datenspeicher zu kopieren.

Die Schritte S1 bis S4 kommen auch zur Ausführung, wenn in einer Relation in dem nichtflüchtigen Datenspeicher PM ein neuer Datensatz hinzugefügt wird. Für diesen neu hinzugefügten Datensatz muss ebenfalls ein Mapping-Datensatz in der entsprechenden Mapping-Relation angelegt werden, damit auch die Werte der Fremdschlüsselattribute des neuen Datensatzes vor einem unberechtigten Zugriff gesichert sind.

Ändert sich ein Wert eines Fremdschlüsselattributes eines Datensatzes in dem nichtflüchtigen Speicher PM, so muss der geänderte Wert des Fremdschlüsselattributes auch in dem entsprechenden Mapping-Datensatz geändert werden. Hierfür können die Verfahrensschritte S1 bis S3 in identischer Weise wie beim Wiederherstellen der Mapping-Relation ausgeführt werden. In dem Schritt S4 wird allerdings anstelle einer Einfüge-Operation eine Update-Operation durchgeführt, mit der ein bestehender Mapping-Datensatz durch den in dem Schritt S3 erzeugten Mapping-Datensatz ersetzt wird. Vorzugsweise ist es vorgesehen, dass nur dann eine solche Aktualisierung von Mapping-Datensätzen durchgeführt wird, wenn sich in einem Datensatz auch ein Wert eines Fremdschlüsselattributes geändert hat. Ändert sich hingegen nur ein Wert eines Nicht-Schlüsselattributes wird keine Aktualisierung der Mapping-Relationen durchgeführt.

Die vorliegende Erfindung erlaubt es also, Werte von Fremdschlüsselattributen von Datensätzen, die in einer Datenbank speicherbar sind, effektiv und effizient vor einem unberechtigten Zugriff zu sichern, indem die Werte der Fremdschlüsselattribute der Datensätze ausschließlich in einem flüchtigen Datenspeicher gespeichert werden, wobei dieser flüchtige Datenspeicher Bestandteil einer gesicherten und versiegelten Infrastruktur ist. Für das Auflösen von Fremdschlüsselattributen eines Datensatzes muss eine Applikation auf den flüchtigen Datenspeicher in der versiegelten Infrastruktur zugreifen, wobei auch die Applikation in der versiegelten Infrastruktur ausgeführt wird, sodass gewährleistet werden kann, dass auch diese Applikation keine Informationen über die Werte der Fremdschlüsselattribute nach außen geben kann. Lediglich für das Wiederherstellen der in dem flüchtigen Speicher gespeicherten Mapping-Relationen sind die Werte der Fremdschlüsselattribute zusätzlich in den Datensätzen gespeichert, wobei die Mapping-Relationen nur dann aus den Datensätzen hergestellt werden müssen, wenn neben dem flüchtigen Datenspeicher auch sämtliche redundanten flüchtigen Datenspeicher gelöscht wurden.

Um zu gewährleisten, dass auf die in den Datensätzen gespeicherten Werte der Fremdschlüsselattribute kein unberechtigter Zugriff erfolgen kann, sind zumindest die Werte der Fremdschlüsselattribute mit einem kryptografischen Schlüssel verschlüsselt, der dem Besitzer des Datensatzes gehört bzw. zugeordnet ist. Damit kann auch der Betreiber der Datenbank nicht auf die Werte der Fremdschlüsselattribute in den Datensätzen zugreifen.

### Bezugszeichen:

- CUA: flüchtiger Datenspeicher (Clean-Up Area)
- CUA2: redundanter flüchtiger Datenspeicher
- DS: Datensatz in der ersten bzw. zweiten Relation T1, T2
- F: Attribute der ersten bzw. zweiten Relation T1, T2, die keine Fremdschlüsselattribute sind
- FK, FK1, FK2: Fremdschlüsselattribute
- K: Schlüssel des Datensatzes DS (z.B. Primärschlüssel oder zusammengesetzter Primärschlüssel)
- MDS: Mapping-Datensatz in der Mapping-Relation TM
- PK: Primärschlüsselattribut der ersten bzw. zweiten Relation T1, T2
- PM: nichtflüchtiger bzw. permanenter Datenspeicher
- RK1: erste Relationskennung in der Mapping-Relation TM
- RK2: zweite Relationskennung in der Mapping-Relation TM
- S1 bis S4: Schritte des Wiederherstellungsverfahrens
- SK1: erste Spaltenkennung in der Mapping-Relation TM
- SK2: zweite Spaltenkennung in der Mapping-Relation TM
- T1: erste Relation (Datenbanktabelle) einer Datenbank in dem nichtflüchtigen Datenspeicher PM
- T2: zweite Relation (Datenbanktabelle) einer Datenbank in dem nichtflüchtigen Datenspeicher PM
- TM: Mapping-Relation (Datenbanktabelle) einer Datenbank in dem flüchtigen Datenspeicher CUA

## Patentansprüche

1. Verfahren zum Sichern von Werten von Attributen eines Datensatzes (DS), der in einer ersten Relation (T1) einer Datenbank speicherbar ist, vor einem unberechtigten Zugriff, wobei ein Wert eines Primärschlüsselattributes (PK) des Datensatzes auf einen Schlüssel (PK) der ersten Relation (T1) und ein Wert eines Fremdschlüsselattributs (FK) des Datensatzes auf einen Schlüssel (PK,K) einer zweiten Relation (T2,T3) verweist, und wobei
- der Wert eines Fremdschlüsselattributs (FK) und der Wert eines Primärschlüsselattributs (PK) des Datensatzes (DS) in einer Mapping-Relation (TM) gespeichert werden, wobei der Wert des Fremdschlüsselattributs (FK) und der Wert des Primärschlüsselattributs (PK) des Datensatzes (DS) einen Mapping-Datensatz (MDS) in der Mapping-Relation (TM) bilden,
- die Werte einer Anzahl von Attributen (F), die keine Fremdschlüsselattribute sind, des Datensatzes in der ersten Relation (T1) gespeichert werden, wobei die erste Relation (T1) in einem nichtflüchtigen Datenspeicher (PM) gespeichert wird, und
- die Mapping-Relation (TM) ausschließlich in einem flüchtigen Datenspeicher (CUA) gespeichert wird, sodass nach einer Unterbrechung der Stromversorgung die Mapping-Relation (TM) vollständig gelöscht wird.

2. Verfahren nach dem vorhergehenden Anspruch, wobei das Primärschlüsselattribut (PK) des Datensatzes (DS) aus einer Anzahl von Schlüsselattributen des Datensatzes (DS) gebildet wird.

3. Verfahren nach einem der vorhergehenden Ansprüche, wobei bei mehreren ersten Relationen (T1), in denen Datensätze (DS) speicherbar sind, die Werte von Fremdschlüsselattributen umfassen, in der Mapping-Relation (TM) zu jedem Mapping-Datensatz (MDS) zusätzlich gespeichert werden:
- eine erste Relationskennung (RK1), die eine Information darüber umfasst, zu welcher ersten Relation (T1) der mehreren ersten Relationen der jeweilige Mapping-Datensatz (MDS) zugeordnet ist, und
- eine erste Spaltenkennung (SK1), die eine Information darüber umfasst, zu welchem Fremdschlüsselattribut (FK) des Datensatzes (DS) der in dem jeweiligen Mapping-Datensatz (MDS) gespeicherte Wert des Fremdschlüsselattributs zugeordnet ist.

4. Verfahren nach einem der Ansprüche 1 bis 2, wobei bei mehreren ersten Relationen (T1), in denen Datensätze (DS) speicherbar sind, die Werte von Fremdschlüsselattributen umfassen, für jede der ersten Relationen (T1) in dem flüchtigen Datenspeicher (CUA) eine Mapping-Relation (TM) erzeugt wird, in der die Werte der Fremdschlüsselattribute (FK) der jeweiligen Datensätze (DS) gespeichert werden, wobei zusätzlich zum Wert des Fremdschlüsselattributs (FK) der Wert eines Primärschlüsselattributs (PK) des jeweiligen Datensatzes (DS) gespeichert wird.

5. Verfahren nach dem vorhergehenden Anspruch, wobei in der Mapping-Relation (TM) zu jedem Mapping-Datensatz (MDS) zusätzlich eine erste Spaltenkennung (SK1) gespeichert wird, die eine Information darüber umfasst, zu welchem Fremdschlüsselattribut (FK) des Datensatzes (DS) der in dem jeweiligen Mapping-Datensatz (MDS) gespeicherte Wert des Fremdschlüsselattributs zugeordnet ist.

6. Verfahren nach einem der vorhergehenden Ansprüche 3 bis 5, wobei in der Mapping-Relation (TM) zu jedem Mapping-Datensatz (MDS) zusätzlich gespeichert werden:
- eine zweite Relationskennung (RK2), die eine Information darüber umfasst, welche zweite Relation (T2) von mehreren zweiten Relationen von dem Wert des Fremdschlüsselattributs des Mapping-Datensatzes (MDS) referenziert wird, und
- eine zweite Spaltenkennung (SK2), die eine Information darüber umfasst, welcher Schlüssel (K) von dem Wert des Fremdschlüsselattributs des Mapping-Datensatzes (MDS) in der zweiten Relation (T2) referenziert wird.

7. Verfahren nach einem der vorhergehenden Ansprüche, wobei der Wert des Fremdschlüsselattributs (FK) des Datensatzes (DS) zusätzlich in der ersten Relation (T1) gespeichert wird, wobei der in der ersten Relation (T1) gespeicherte Wert des Fremdschlüsselattributs (FK) des Datensatzes (DS) kryptographisch verschlüsselt wird, vorzugsweise mit einem dem Besitzer des Datensatzes zugeordneten kryptographischen Schlüssel.

8. Verfahren nach dem vorhergehenden Anspruch, wobei zusätzlich zu dem Wert des Fremdschlüsselattributs (FK) ein Wert mindestens eines weiteren Attributs (F), das kein Fremdschlüsselattribut ist, des Datensatzes (DS) kryptographisch verschlüsselt wird.

9. Verfahren nach dem vorhergehenden Anspruch, wobei beim Erzeugen eines neuen Datensatzes (DS) zumindest die Werte der Fremdschlüsselattribute (FK) des neuen Datensatzes (DS) und die Werte der Primärschlüsselattribute (PK) des neuen Datensatzes (DS) in den Mapping-Relationen (TM) gespeichert werden, und zumindest die Werte der Fremdschlüsselattribute (FK) in der ersten Relation (T1) kryptographisch verschlüsselt werden.

10. Verfahren nach dem vorhergehenden Anspruch, wobei die Mapping-Relationen (TM) zusätzlich in einem redundanten flüchtigen Datenspeicher (CUA2) gespeichert werden.

11. Verfahren zum Herstellen und/oder Wiederherstellen einer Mapping-Relation (TM) in einem flüchtigen Datenspeicher (CUA), wobei in der Mapping-Relation Werte von Fremdschlüsselattributen (FK) eines Datensatzes, der in einer ersten Relation (T1) einer Datenbank gespeichert ist, speicherbar sind, wobei zumindest die Werte der Fremdschlüsselattribute (FK) in der ersten Relation (T1) kryptographisch verschlüsselt sind und vorzugsweise ausschließlich mit einem kryptographischen Schlüssel des Besitzers des Datensatzes entschlüsselbar sind, wobei
- bei einem Zugriff des Besitzers des Datensatzes auf den Datensatz die Werte der verschlüsselten Fremdschlüsselattribute (FK) mit dem kryptographischen Schlüssel des Besitzers des Datensatzes entschlüsselt werden,
- die entschlüsselten Werte der Fremdschlüsselattribute (FK) in einem Mapping-Datensatz (MDS) der Mapping-Relation (TM) gespeichert werden, und
- zusätzlich zu den Werten der Fremdschlüsselattribute (FK) in dem Mapping-Datensatz (MDS) der Wert eines Primärschlüsselattributs (PK) des Datensatzes gespeichert wird, und
- wobei die Mapping-Relation ausschließlich in einem flüchtigen Datenspeicher gespeichert wird, sodass nach einer Unterbrechung der Stromversorgung die Mapping-Relation vollständig gelöscht wird.

12. Verfahren nach dem vorhergehenden Anspruch, wobei vor dem entschlüsseln der verschlüsselten Fremdschlüsselattribute (FK) geprüft wird, ob für den Wert des Primärschlüsselattributs (PK) des Datensatzes bereits ein Mapping-Datensatz (MDS) in der Mapping-Relation (TM) gespeichert ist.

13. Verfahren nach einem der beiden vorhergehenden Ansprüche, wobei in dem Mapping-Datensatz (MDS) zusätzlich gespeichert werden:
- eine erste Spaltenkennung (SK1), die eine Information darüber umfasst, welchem Fremdschlüsselattribut (FK) des Datensatzes der in dem Mapping-Datensatz (MDS) gespeicherte Wert des Fremdschlüsselattributs zugeordnet ist, und
- vorzugsweise zusätzlich:
- eine erste Relationskennung (RK1), die eine Information darüber umfasst, welcher ersten Relation (T1) von mehreren ersten Relationen der Mapping-Datensatz (MDS) zugeordnet ist, und/oder
- eine zweite Relationskennung (RK2), die eine Information darüber umfasst, welche zweite Relation (T2) von mehreren zweiten Relationen von dem Wert des Fremdschlüsselattributs des Mapping-Datensatzes (MDS) referenziert wird, und/oder
- eine zweite Spaltenkennung (SK2), die eine Information darüber umfasst, welcher Schlüssel (K) von dem Wert des Fremdschlüsselattributs des Mapping-Datensatzes (MDS) in der zweiten Relation (T2) referenziert wird.

14. Verfahren nach einem der vorhergehenden Ansprüche, wobei die Mapping-Relationen (TM) in einer gesicherten und versiegelten Infrastruktur gespeichert werden und/oder die Werte der verschlüsselten Fremdschlüsselattribute (FK) in einer gesicherten und versiegelten Infrastruktur entschlüsselt werden, wobei die hierfür notwendigen kryptographischen Schlüssel ausschließlich in der gesicherten und versiegelten Infrastruktur gespeichert sind.

15. Verfahren nach dem vorhergehenden Anspruch, wobei eine Anwendung zum Zugriff auf die Daten der Mapping-Relationen (TM) in der gesicherten und versiegelten Infrastruktur ausgeführt wird.

## Claims

1. Method for safeguarding values of attributes of a data set (DS) which can be stored in a first relation (T1) of a database against unauthorized access, wherein a value of a primary key attribute (PK) of the data set refers to a key (PK) of the first relation (T1) and a value of a foreign key attribute (FK) of the data set refers to a key (PK, K) of a second relation (T2, T3), and wherein
- the value of a foreign key attribute (FK) and the value of a primary key attribute (PK) of the data set (DS) are stored in a mapping relation (TM), wherein the value of the foreign key attribute (FK) and the value of the primary key attribute (PK) of the data set (DS) form a mapping data set (MDS) in the mapping relation (TM),
- the values of a number of attributes (F) of the data set that are not foreign key attributes are stored in the first relation (T1), wherein the first relation (T1) is stored in a non-volatile data memory (PM), and
- the mapping relation (TM) is stored exclusively in a volatile data memory (CUA) such that the mapping relation (TM) is completely deleted following an interruption to the power supply.

2. Method according to the preceding claim, wherein the primary key attribute (PK) of the data set (DS) is formed from a number of key attributes of the data set (DS).

3. Method according to either of the preceding claims, wherein, in the case of a plurality of first relations (T1) in which data sets (DS) can be stored that comprise values of foreign key attributes, the following are additionally stored in the mapping relation (TM) for each mapping data set (MDS):
- a first relation identifier (RK1) which comprises information about which first relation (T1) of the plurality of first relations is assigned to the relevant mapping data set (MDS), and
- a first column identifier (SK1) which comprises information about which foreign key attribute (FK) of the data set (DS) is assigned to the value of the foreign key attribute that is stored in the relevant mapping data set (MDS).

4. Method according to either claim 1 or claim 2, wherein, in the case of a plurality of first relations (T1) in which data sets (DS) can be stored that comprise values of foreign key attributes, a mapping relation (TM) is generated for each of the first relations (T1) in the volatile data memory (CUA), in which mapping relation the values of the foreign key attributes (FK) of the relevant data sets (DS) are stored, wherein the value of a primary key attribute (PK) of the relevant data set (DS) is stored in addition to the value of the foreign key attribute (FK).

5. Method according to the preceding claim, wherein a first column identifier (SK1) is additionally stored in the mapping relation (TM) for each mapping data set (MDS), which column identifier comprises information about which foreign key attribute (FK) of the data set (DS) is assigned to the value of the foreign key attribute that is stored in the relevant mapping data set (MDS).

6. Method according to any of the preceding claims 3 to 5, wherein the following are additionally stored in the mapping relation (TM) for each mapping data set (MDS):
- a second relation identifier (RK2) which comprises information about which second relation (T2) of a plurality of second relations is referenced by the value of the foreign key attribute of the mapping data set (MDS), and
- a second column identifier (SK2) which comprises information about which key (K) is referenced by the value of the foreign key attribute of the mapping data set (MDS) in the second relation (T2).

7. Method according to any of the preceding claims, wherein the value of the foreign key attribute (FK) of the data set (DS) is additionally stored in the first relation (T1), wherein the value of the foreign key attribute (FK) of the data set (DS) that is stored in the first relation (T1) is cryptographically encrypted, preferably by means of a cryptographic key assigned to the owner of the data set.

8. Method according to the preceding claim, wherein a value of at least one further attribute (F) of the data set (DS) that is not a foreign key attribute is cryptographically encrypted in addition to the value of the foreign key attribute (FK).

9. Method according to the preceding claim, wherein, when generating a new data set (DS), at least the values of the foreign key attributes (FK) of the new data set (DS) and the values of the primary key attributes (PK) of the new data set (DS) are stored in the mapping relations (TM), and at least the values of the foreign key attributes (FK) in the first relation (T1) are cryptographically encrypted.

10. Method according to the preceding claim, wherein the mapping relations (TM) are additionally stored in a redundant volatile data memory (CUA2).

11. Method for creating and/or recovering a mapping relation (TM) in a volatile data memory (CUA), wherein values of foreign key attributes (FK) of a data set which can be stored in a first relation (T1) of a database can be stored in the mapping relation, wherein at least the values of the foreign key attributes (FK) in the first relation (T1) are cryptographically encrypted and preferably can be decrypted exclusively by means of a cryptographic key of the owner of the data set, wherein
- when the owner of the data set accesses the data set, the values of the encrypted foreign key attributes (FK) are decrypted by means of the cryptographic key of the owner of the data set,
- the decrypted values of the foreign key attributes (FK) are stored in a mapping data set (MDS) of the mapping relation (TM), and
- the value of a primary key attribute (PK) of the data set is stored in the mapping data set (MDS) in addition to the values of the foreign key attributes (FK), and
- wherein the mapping relation is stored exclusively in a volatile data memory such that the mapping relation is completely deleted following an interruption to the power supply.

12. Method according to the preceding claim, wherein, before decrypting the encrypted foreign key attributes (FK), a check is carried out as to whether a mapping data set (MDS) is already stored in the mapping relation (TM) for the value of the primary key attribute (PK) of the data set.

13. Method according to one of the two preceding claims, wherein the following is additionally stored in the mapping data set (MDS):
- a first column identifier (SK1) which comprises information about which foreign key attribute (FK) of the data set is assigned to the value of the foreign key attribute that is stored in the mapping data set (MDS), and
- preferably additionally:
- a first relation identifier (RK1) which comprises information about which first relation (T1) of a plurality of first relations is assigned to the mapping data set (MDS), and/or
- a second relation identifier (RK2) which comprises information about which second relation (T2) of a plurality of second relations is referenced by the value of the foreign key attribute of the mapping data set (MDS), and/or
- a second column identifier (SK2) which comprises information about which key (K) is referenced by the value of the foreign key attribute of the mapping data set (MDS) in the second relation (T2).

14. Method according to any of the preceding claims, wherein the mapping relations (TM) are stored in a safeguarded and sealed infrastructure and/or the values of the encrypted foreign key attributes (FK) are decrypted in a safeguarded and sealed infrastructure, wherein the cryptographic keys required therefor are exclusively stored in the safeguarded and sealed infrastructure.

15. Method according to the preceding claim, wherein an application for accessing the data of the mapping relations (TM) is executed in the safeguarded and sealed infrastructure.

## Revendications

1. Procédé de sécurisation de valeurs d'attributs d'un jeu de données (DS) stockable dans une première relation (T1) d'une base de données contre un accès non autorisé, dans lequel une valeur d'un attribut de clé primaire (PK) du jeu de données renvoie à une clé (PK) de la première relation (T1) et une valeur d'un attribut de clé étrangère (FK) du jeu de données renvoie à une clé (PK, K) d'une seconde relation (T2, T3), et dans lequel
- la valeur d'un attribut de clé étrangère (FK) et la valeur d'un attribut de clé primaire (PK) du jeu de données (DS) sont stockées dans une relation de mappage (TM), la valeur de l'attribut de clé étrangère (FK) et la valeur de l'attribut de clé primaire (PK) du jeu de données (DS) formant un jeu de données de mappage (MDS) dans la relation de mappage (TM),
- les valeurs d'un certain nombre d'attributs (F), autres que les attributs de clés étrangères du jeu de données, sont stockées dans la première relation (T1), la première relation (T1) étant stockée dans une mémoire de données non volatile (PM), et
- la relation de mappage (TM) étant stockée uniquement dans une mémoire de données volatile (CUA), de sorte que la relation de mappage (TM) soit complètement supprimée après une interruption de l'alimentation électrique.

2. Procédé selon la revendication précédente, dans lequel l'attribut de clé primaire (PK) du jeu de données (DS) est formé à partir d'un certain nombre d'attributs de clés du jeu de données (DS).

3. Procédé selon l'une des revendications précédentes, dans lequel, dans le cas d'une pluralité de premières relations (T1) dans lesquelles des jeux de données (DS) comprenant des valeurs d'attributs de clés étrangères peuvent être stockés, les éléments suivants sont en outre stockés dans la relation de mappage (TM) avec chaque jeu de données de mappage (MDS) :
- un premier identificateur de relation (RK1) comprenant des informations sur la première relation (T1) de la pluralité de premières relations à laquelle le jeu de données de mappage (MDS) respectif est associé, et
- un premier identificateur de colonne (SK1) comprenant des informations sur l'attribut de clé étrangère (FK) du jeu de données (DS) auquel la valeur de l'attribut de clé étrangère stockée dans le jeu de données de mappage (MDS) respectif est associée.

4. Procédé selon l'une des revendications 1 à 2, dans lequel, dans le cas d'une pluralité de premières relations (T1) dans lesquelles des jeux de données (DS) comprenant des valeurs d'attributs de clés étrangères peuvent être stockés, une relation de mappage (TM) est générée pour chacune des premières relations (T1) dans la mémoire de données volatile (CUA), relation de mappage dans laquelle les valeurs des attributs de clés étrangères (FK) des jeux de données (DS) respectifs sont stockées, dans lequel, outre la valeur de l'attribut de clé étrangère (FK), la valeur d'un attribut de clé primaire (PK) du jeu de données (DS) respectif est stockée.

5. Procédé selon la revendication précédente, dans lequel, dans la relation de mappage (TM) avec chaque jeu de données de mappage (MDS), un premier identificateur de colonne (SK1) est en outre stocké, lequel identificateur de colonne comprend des informations sur l'attribut de clé étrangère (FK) du jeu de données (DS) auquel la valeur de l'attribut de clé étrangère stockée dans le jeu de données de mappage (MDS) respectif est associée.

6. Procédé selon l'une des revendications précédentes 3 à 5, dans lequel, les éléments suivants sont en outre stockés dans la relation de mappage (TM) avec chaque jeu de données de mappage (MDS) :
- un second identificateur de relation (RK2) comprenant des informations sur la seconde relation (T2) de la pluralité de secondes relations qui est référencée par la valeur de l'attribut de clé étrangère du jeu de données de mappage (MDS), et
- un second identificateur de colonne (SK2) comprenant des informations sur la clé (K) de la valeur de l'attribut de clé étrangère du jeu de données de mappage (MDS) qui est référencée dans la seconde relation (T2).

7. Procédé selon l'une des revendications précédentes, dans lequel la valeur de l'attribut de clé étrangère (FK) du jeu de données (DS) est en outre stockée dans la première relation (T1), dans lequel la valeur de l'attribut de clé étrangère (FK) du jeu de données (DS) stockée dans la première relation (T1) est codée par cryptographie, de préférence avec une clé cryptographique associée au détenteur du jeu de données.

8. Procédé selon la revendication précédente, dans lequel, outre la valeur de l'attribut de clé étrangère (FK), une valeur d'au moins un autre attribut (F), autre qu'un attribut de clé étrangère du jeu de données (DS), est codée par cryptographie.

9. Procédé selon la revendication précédente, dans lequel, lors de la génération d'un nouveau jeu de données (DS), au moins les valeurs des attributs de clés étrangères (FK) du nouveau jeu de données (DS) et les valeurs des attributs de clés primaires (PK) du nouveau jeu de données (DS) sont stockées dans les relations de mappage (TM), et au moins les valeurs des attributs de clés étrangères (FK) contenues dans la première relation (T1) sont codées par cryptographie.

10. Procédé selon la revendication précédente, dans lequel les relations de mappage (TM) sont en outre stockées dans une mémoire de données volatile redondante (CUA2).

11. Procédé d'établissement et/ou de rétablissement d'une relation de mappage (TM) dans une mémoire de données volatile (CUA), dans lequel, dans la relation de mappage, les valeurs d'attributs de clés étrangères (FK) d'un jeu de données stocké dans une première relation (T1) d'une base de données, peuvent être stockées, dans lequel au moins les valeurs des attributs de clés étrangères (FK) contenues dans la première relation (T1) sont codées par cryptographie et sont de préférence être décodées uniquement avec une clé cryptographique du détenteur du jeu de données, dans lequel,
- lorsque le détenteur du jeu de données accède au jeu de données, les valeurs des attributs de clés étrangères (FK) codées sont décodées avec la clé cryptographique du détenteur du jeu de données,
- les valeurs décodées des attributs de clés étrangères (FK) sont stockées dans un jeu de données de mappage (MDS) de la relation de mappage (TM), et
- outre les valeurs des attributs de clés étrangères (FK) contenues dans le jeu de données de mappage (MDS), la valeur d'un attribut de clé primaire (PK) du jeu de données est stockée, et
- la relation de mappage étant stockée uniquement dans une mémoire de données volatile, de sorte que, après une interruption de l'alimentation électrique, la relation de mappage soit complètement supprimée.

12. Procédé selon la revendication précédente, dans lequel, avant le décodage des attributs de clés étrangères (FK) codés, on vérifie si, pour la valeur de l'attribut de clé primaire (PK) du jeu de données, un jeu de données de mappage (MDS) dans la relation de mappage (TM) est précédemment stocké.

13. Procédé selon l'une des deux revendications précédentes, dans lequel les éléments suivants sont en outre stockés dans le jeu de données de mappage (MDS) :
- un premier identificateur de colonne (SK1) comprenant des informations sur l'attribut de clé étrangère (FK) du jeu de données auquel la valeur de l'attribut de clé étrangère stockée dans le jeu de données de mappage (MDS) est associée, et
- de préférence en outre :
- un premier identificateur de relation (RK1) comprenant des informations sur la première relation (T1) de la pluralité de premières relations qui est associée au jeu de données de mappage (MDS), et/ou
- un second identificateur de relation (RK2) comprenant des informations sur la seconde relation (T2) de la pluralité de secondes relations qui est référencée par la valeur de l'attribut de clé étrangère du jeu de données de mappage (MDS), et/ou
- un second identificateur de colonne (SK2) comprenant des informations sur la clé (K) de la valeur de l'attribut de clé étrangère du jeu de données de mappage (MDS) qui est référencée dans la seconde relation (T2).

14. Procédé selon l'une des revendications précédentes, dans lequel les relations de mappage (TM) sont stockées dans une infrastructure sécurisée et verrouillée et/ou les valeurs des attributs de clés étrangères (FK) codés sont décodées dans une infrastructure sécurisée et verrouillée, dans lequel les clés cryptographiques nécessaires à cet effet sont stockées uniquement dans l'infrastructure sécurisée et verrouillée.

15. Procédé selon la revendication précédente, dans lequel une application est exécutée afin d'accéder aux données des relations de mappage (TM) dans l'infrastructure sécurisée et verrouillée.
